# EUROPÄISCHE PATENTSCHRIFT

(11) **EP 0 597 002 B1**
(45) Veröffentlichungstag und Bekanntmachung des Hinweises auf die Patenterteilung: **10.06.1998**
(21) Anmeldenummer: 92916819.3
(22) Anmeldetag: 03.08.1992
(51) Int. Cl.: H04N 7/087

(54) **VERFAHREN ZUM ÜBERTRAGEN VON DATEN IN FERNSEHZEILEN**
DATA TRANSMISSION PROCESS IN TELEVISION LINES
PROCEDE DE TRANSMISSION DE DONNEES DANS DES LIGNES DE TELEVISION

(30) Priorität: 01.08.1991 DE 4125473; 08.10.1991 DE 4133355; 09.10.1991 DE 4133496
(43) Veröffentlichungstag der Anmeldung: 18.05.1994
(60) Teilanmeldung: 97116137.7
(73) Patentinhaber: Thomson Consumer Electronics Sales GmbH, 30453 Hannover (DE)
(72) Erfinder: EITZ, Gerhard, D-85586 Poing (DE); GYARMATI, Sándor, D-78052 VS-Villingen (DE); QUANDT, Siegfried, D-78050 VS-Villingen (DE)
(74) Vertreter: Hartnack, Wolfgang, Dipl.-Ing.
(86) Internationale Anmeldenummer: EP9201750
(87) Internationale Veröffentlichungsnummer: WO9303577

(56) Entgegenhaltungen:
- EP-A- 0 028 443
- EP-A- 0 343 740
- EP-A- 0 468 447
- WO-A-90/13970
- DE-C- 3 418 068
- DE-C- 3 634 757
- US-A- 4 679 083
- US-A- 4 956 709

## Beschreibung

Die vorliegende Erfindung betrifft ein Verfahren zum Übertragen alphanumerischer Daten gemäß dem Oberbegriff des Anspruchs 1. Ein derartiges Verfahren ist aus der DE-A-34 18 068 bekannt.

Nach in Deutschland, Großbritannien und in anderen europäischen Staaten von den Fernsehsendeanstalten verwendeten oder vorgeschlagenen Teletextstandards (Videotextstandards), beispielsweise nach dem sogenannten "Level-1-Teletext"-Standard, werden die codierten, alphanumerischen Daten in vertikalen Austastlücken eines Fernsehsignals zyklisch oder quasi-zyklisch übertragen. Die übertragenen Daten werden wiedergabeseitig gesammelt und seitenweise als stehendes Fernsehbild (= Teletext-Seite) dargestellt. Die jeweils eine Seite repräsentierenden Nutzdaten sind zu einem Block zusammengefaßt, welchem ein Datenpaket als Kopfzeile vorangestellt ist, das die Seitennummer des betreffenden Blocks identifizierte.

Gemäß der DE-A-34 18 068 ist vorgesehen, daß jeder Kopfzeile ein weiteres Datenpaket (Vorkopfzeile) von der Länge einer Fernsehzeile vorangestellt wird, wobei diese Vorkopfzeile die Seitennummer der im Übertragungszyklus übernächsten Seite identifiziert. In einer Variante gemäß dieser Druckschrift kann auch vorgesehen sein, daß innerhalb einer Zeile des dem Ende des momentan Übertragenen Blocks vorangehenden Fernsehhalbbildes eine Vorkopfzeile von der Länge einer Fernsehzeile übertragen wird, und daß unmittelbar hinter der Vorkopfzeile die Kopfzeile des momentan übertragenen Blocks wiederholt wird. Eine solchermaßen wiederholte Kopfzeile wird auch als Zwischenkopfzeile bezeichnet.

Das wiedergabeseitige Sammeln der Daten erfolgt bei einem bekannten Decoder (Firmendruckschrift "Valvo Technische Informationen für die Industrie", Nr. TI 840314) in einer Seitenspeicheranordnung, deren Speichervolumen der maximalen Datenmenge von vier oder acht Seiten entspricht. Wegen des "adaptiven Übertragungsprinzips" zwingt diese Beschränkung des Speichervolumens dazu, daß vor der Darstellung einer vom Benutzer angewählten Seite der Speicher gelöscht werden muß, bevor die Daten der angewählten Seite - sobald sie im Übertragungszyklus auftreten - eingeladen werden können. Das "adaptive Übertragungsprinzip" besagt, daß eine Teletextzeile ohne Informationsgehalt ("leer") nicht übertragen wird, um den Übertragungszyklus zu verkürzen. Der Löschvorgang folgt dabei erst dann, wenn die Kopfzeile der angewählten Seite decodiert wird.

Da dieser Löschvorgang bei einer beträchtlichen Anzahl von bisher in Fernsehempfangsgeräten verwendeten Teletext-Decodern etwa 20 Millisekunden dauert, muß aus Kompatibilitätsgründen zwischen der Übertragung der Kopfzeile und der Übertragung der darauf folgenden Nutzdaten ein Warteintervall von etwa 20 Millisekunden liegen. Gleiches gilt, wenn statt einer Neuanwahl einer Seite in der Kopfzeile ein spezieller Löschbefehl enthalten ist, was beispielsweise bei sogenannten Mehrfachseiten des Übertragungszyklus (mehrere verschiedene Seiten mit der gleichen Seitennummer) der Fall ist. Die Einhaltung dieses Warteintervalls erfolgt dadurch, daß die Kopfzeile und die nachfolgenden Nutzdaten in getrennten Fernsehhalbbildern übertragen werden.

Gegebenenfalls werden im Fernsehhalbbild, in welchem die Kopfzeile übertragen wird, restliche Teletextzeilen durch Wiederholen der Kopfzeile aufgefüllt. Diese Kopfzeilenwiederholung geht allerdings auf Kosten einer verlängerten Zyklusdauer. Da im Falle der Verwendung eines Seitenspeichers für mehrere Seiten und bei dem Vollkanalbetrieb mit adaptiver Seitenübertragung im sichtbaren Bildbereich das Löschintervall von 20 Millisekunden für die Löschung des gesamten Seitenspeichers zu kurz bzw. überhaupt nicht vorhanden ist, muß in diesen Fällen eine Löschung des gesamten Seitenspeichers in der herkömmlichen Weise vermieden werden.

Hierzu ist es aus der EP-A-0 343 740 A2 bekannt, für alle Zeilen einer Seite einschließlich der Kopfzeile eine gemeinsame Kennung zu speichern. Ändert sich die Seite durch Übertragen einer neuen Kopfzeile, so wird für alle Zeilen der neuen Seite ein gemeinsamer neuer Kennungswert entsprechend dem kennungswert der neuen Kopfzeile vergeben. Der Decoder vergleicht beim Auslesen den Kennungswert der einzelnen Zeilen und liest nur bei Gleichheit die betreffende Zeile aus; bei Ungleichheit werden Leerzeichen für die betreffende Zeile ausgelesen.

Aus dieser Druckschrift ist es ferner bekannt, zur Übertragung zusätzlicher Informationen, wie z.B. neuer Zeichen oder kommerzieller Daten, jede Seite durch zusätzliche Zeilen Nr. 26 bis 31 ("Geisterzeilen") zu verlängern, was jedoch zu Lasten der Zykluszeit geht, da sich an der Wiederholung der Kopfzeilen nichts ändert. Auch für diese Geisterzeilen wird eine Kennung gespeichert, die im Falle der nicht-seitenbezogenen Geisterzeilen Nr. 29 bis 31 nicht durch eine Kopfzeile verändert wird.

Es ist schließlich aus der DE-A-39 14 697 A 1 bekannt, bei Teletext auch Sonderzeichen, Feinstrukturen und Farbschattierungen kompatibel zum bestehenden Teletext-Standard in Ergänzungsseiten zu übertragen, die einer Teletextzeile (Level 1) zugeordnet sind. Empfangsseitig werden die einer gewünschten Teletextseite zugeordnete(n) Ergänzungsseite(n) getrennt von den betreffenden Teletextseite(n) zwischengespeichert und derart verarbeitet, daß an denjenigen Zeichenplätzen, wo keine Ergänzungsdaten vorliegen, die den Grunddaten zugeordneten Zeichen zur Anzeige gebracht werden. An denjenigen Zeichenplätzen, wo Ergänzungsdaten vorliegen, werden die an den Grunddaten im Zusammenwirken mit den Ergänzungsdaten zugeordneten Zeichen zur Anzeige gebracht. Bei der Übertragung der Ergänzungsdaten zusätzlich zu den normalen Teletextseiten (Level 1) wird die Zyklusdauer entsprechend der Anzahl und der Länge der Ergänzungsseiten erhöht.

Während üblicherweise im Fernsehhalbbild, in welchem die Kopfzeile übertragen wird, gegebenenfalls restliche Textzeilen durch Wiederholen der Kopfzeile aufgefüllt werden, ist gemäß der DE-A-34 18 068 C1 vorgesehen, auf die redundante Wiederholung der Kopfzeilen zu verzichten und jeder Kopfzeile ein weiteres Datenpaket (Vorkopfzeile) von der Länge einer Fernsehzeile voranzustellen, welches die Seitennummer der im Übertragungszyklus übernächsten Seite identifiziert. Ferner ist gemäß dieser Druckschrift vorgesehen, daß das Löschen des Seitenspeichers bereits während der Übertragung der der gewünschten Seite unmittelbar vorangehenden Seite erfolgt, so daß eine Wiederholung der Kopfzeilen auch unter Berücksichtigung der erforderlichen Löschzeiten entbehrlich ist. Mit diesem Verfahren kann daher die Zyklusdauer und damit die durchschnittliche Wartezeit auf eine bestimmte Seite entscheidend verringert werden.

In der Praxis sind bei der Durchführung des aus der DE-A-34 18 068 vorbekannten Vorkopfzeilen-Verfahrens jedoch Probleme aufgetreten, die dazu geführt haben, daß solche Übertragungen eingestellt werden mußten.

Zum besseren Verständnis des Teletext-Übertragungsverfahrens wird auf die Druckschrift "Technische Richtlinie ARD/ZDF, Nr. 8 R 4, Fernsehtext-Spezifikation", Hrsg. IRT Institut für Rundfunktechnik GmbH, München, Juni 1986, Bezug genommen. Danach sind bis zu acht Magazine, deren jeweilige Nummer im folgenden symbolisch mit dem Buchstaben "m" (m = 1, 2, ..., 8) dargestellt ist, vorgesehen, denen die Teletext-Seiten zugeordnet werden können. Jedes Magazin kann bis zu 100 Seiten aufweisen, deren jeweilige Nummer im folgenden symbolisch mit dem Buchstaben "n" (n = 00, 01, 02, ..., 99) dargestellt ist. Eine vollständige Adressierung einer Teletext-Seite kann also durch eine dreistellige Dezimalzahl (m,n) erfolgen, deren erste Stelle die Magazin- und deren zweite und dritte Stelle die Seitennummer innerhalb dieses Magazins angeben. Beispielsweise stellt die Teletext-Seite 103 die Seite Nummer 03 in dem Magazin Nummer 1 dar. Für Ausbaustufen des Teletextdienstes ist eine Erweiterung auf Hexadezimalzahlen vorgesehen.

Die bei dem Vorkopfzeilen-Verfahren aufgetretenen Schwierigkeiten sind vor allem darauf zurückzuführen, daß eine asynchrone Anforderung einer beliebigen Seite in Abhängigkeit von internen Steuerungsabläufen des verwendeten Teletext-Decoders dazu führen kann, daß diese Seite nicht vollständig oder überhaupt nicht eingelesen wird.

Letzteres kann beispielsweise dann geschehen, wenn empfängerseitig eine gewünschte Teletext-Seite (m,(n+1)) angefordert wird, bevor die dieser Seite zugeordnete Vorkopfzeile (m,(n+1))VK, die dieselbe Information wie die dieser Seite zugeordnete Kopfzeile (m,(n+1))K aufweist, empfangen wird. Im Anschluß an die Vorkopfzeile (m,(n+1))VK folgt nach dem bekannten Verfahren die Kopfzeile (m,n)K, was bei dem genannten internen Steuerungsablauf des Teletext-Decoders zugleich als Abschluß der Datenakquisition für die Teletext-Seite (m,n+1) gewertet wird, so daß der nach Abschluß der Übertragung für die Teletext-Seite (m,n) erfolgende Empfang der Kopfzeile (m,(n+1))K den Decoder nicht mehr für Datenakquisition bezüglich der Seite (m,(n+1)) öffnet. Die Seite (m,(n+1)) "gilt" ja als bereits empfangen und braucht folglich nicht mehr eingelesen zu werden. Ist zwischen der Vorkopfzeile (m,(n+1))VK und der Kopfzeile (m,n)K noch ein Zwischenkopf (m,n)ZK mit restlichen, der Teletext-Seite (m,n) zugeordneten Datenzeilen im übertragungszyklus enthalten, so wird aus denselben Gründen die Seite (m,n) nur unvollständig eingespeichert.

Insbesondere bei Anforderung von Seiten, die wichtige Informationen für Decoder-interne Sortier- und/oder Verwaltungsangaben enthalten, beispielsweise die "TOP" (= Table of Pages) genannten Systemtabellen (vergl. DE-A-36 34 757), kann dies zu beträchtlichen Problemen führen, ganz abgesehen von optischen Ungereimtheiten, die bei fehlenden Zeilen auch "normale" Teletextseiten ohnehin schon beeinträchtigen können.

Der Erfindung liegt die Aufgabe zugrunde, das eingangs genannte Verfahren so auszubilden, daß herkömmliche Fernsehtextdecoder gemäß Level 1 nicht gestört werden.

Diese Aufgabe wird erfindungsgemäß durch die in Anspruch 1 angegebenen Merkmale gelöst.

Das erfindungsgemäße Verfahren hat den Vorteil, daß auf die Übertragung der oben erläuterten Vorkopfzeilen und Zwischenkopfzeilen verzichtet werden kann, ohne daß dadurch eine Verlängerung der Zyklusdauer in Kauf genommen werden muß, ferner, daß die mit dem Prinzip des Vorkopfzeilen-Verfahrens verbundene Verkürzung der Zyklusdauer weiterhin nutzbar gemacht wird und überdies im Vergleich dazu eine weitere Verkürzung der Zyklusdauer erzielt wird.

Die erfindungsgemäße Ausbildung beruht auf der Erkenntnis, Videotext-Decoder im sogenannten Parallel-Modus zu betreiben, so daß nach dem Empfang einer Kopfzeile der nachfolgende Empfang von Kopfzeilen noch nicht die Datenakquisition abschließt.

In einer Weiterbildung des erfindungsgemäßen Verfahrens wird bei der Ausstrahlung der Teletext-Daten zugleich das im Teletext-Standard zur Unterscheidung der Magazin-Übertragungsarten - serielle oder parallele Magazin-Übertragung - vorgesehene Steuerbit C11 mit dem den Parallel-Modus kennzeichnenden Wert übertragens. Gemäß der oben genannten ARD/ZDF-Spezifikation wird hierzu das Steuerbit C11 auf den Wert "null" gesetzt übertragen.

Dies hat den zusätzlichen Vorteil, daß die mit dem Prinzip des Vorkopfzeilen-Verfahrens verbundene Verkürzung der Zyklusdauer auch für solche herkömmlichen Teletext-Decoder auf kompatible Weise nutzbar gemacht wird, die für den eingangs erwähnten Löschvorgang etwa 20 Millisekunden benötigen.

Die Betriebsart "Parallel-Modus" ist seinerzeit für einen völlig anderen Zweck in die ARD/ZDF-Spezifikation aufgenommen worden. Durch die Zuordnung einzelner Magazine auf jeweils eine bestimmte Zeile oder Zeilengruppe sollte sich für die innerhalb der Vertikal-Austastlücke von Fernsehhalbbildern verfügbaren Zeilen mehrere unabhängige Übertragungszyklen einrichten lassen. Dabei mußten dann je nach verwendeter Seitenzahl innerhalb der einzelnen Übertragungszyklen allerdings unterschiedliche Zugriffszeiten zu den Seiten der einzelnen Zyklen in Kauf genommen werden.

Die genannte Weiterbildung beruht auf der Erkenntnis, vorhandene Steuereinrichtungen in Videotext-Decodern gezielt so auszunutzen, daß nach dem Empfang einer Kopfzeile der nachfolgende Empfang von Kopfzeilen noch nicht die Datenakquisition abschließt. Wird dem Decoder nämlich mit Hilfe des empfangenen betreffenden Steuerbits das Vorliegen der Betriebsart "Parallel-Modus" signalisiert, so wird die decoderseitige Datenakquisition erst abgeschlossen, wenn nach Empfang einer eine angeforderte Seite kennzeichnenden Kopfzeile erneut eine Kopfzeile desselben Magazins empfangen wird.

Mit dieser Erkenntnis läßt sich bei allen auf dem Markt befindlichen Decodern, die der oben genannten ARD/ZDF-Spezifikation genügen, beispielsweise bei den unter den Typenbezeichnungen "TPU 2732" und "TPU 2735" bekannten Teletext-Prozessoren der Firma ITT Semiconductors, die Bereitschaft zur Datenakquisition einer gewünschten, vom Benutzer angeforderten Teletext-Seite ab dem auf die Aufforderung nachfolgenden Empfang der entsprechenden Kopfzeile automatisch solange fortsetzen, bis eine demselben Magazin wie diese Kopfzeile zugeordnete andere Kopfzeile korrekt empfangen wird.

Weitere Merkmale, Vorteile und Einzelheiten der Erfindung werden nachstehend an Ausführungsbeispielen anhand der Zeichnung näher erläutert. Dabei zeigen:
- Fig. 1a: eine schematische Darstellung eines Zyklus' von Teletext-Seiten nach dem Stand der Technik unter Verwendung von Vorkopfzeilen,
- Fig. 1b: eine schematische Darstellung eines Zyklus' von. Teletext-Seiten eines ersten Ausführungsbeispiels der erfindungsgemäßen ersten Ausbildung des Übertragungsverfahrens,
- Fig. 2a: einen schematischen Ausschnitt aus einem Zyklus von Teletext-Zeilen nach dem Stand der Technik, jedoch ohne Vorkopfzeilen-Verfahren,
- Fig. 2b: einen schematischen Ausschnitt aus einem Zyklus von Teletext-Zeilen nach dem Stand der Technik unter Verwendung von Vorköpfen und Zwischenköpfen.

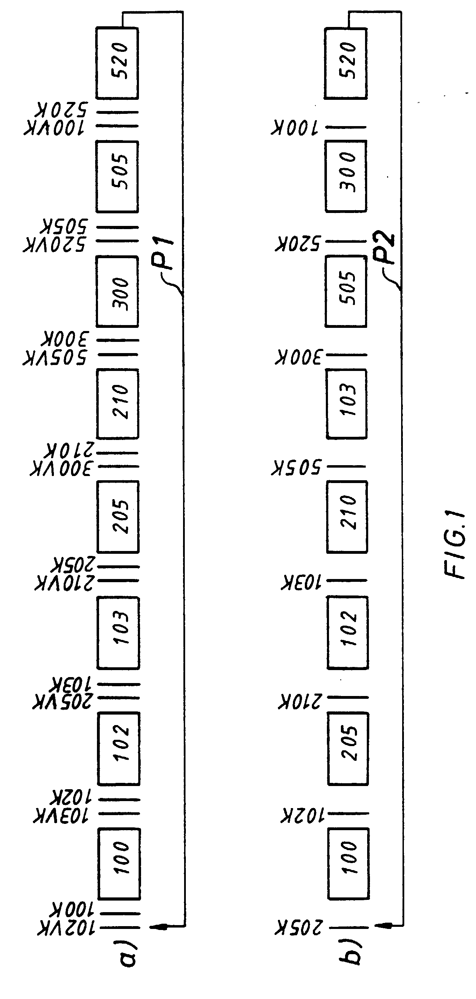

Der in Fig. 1a schematisch dargestellte Übertragungszyklus von Teletext-Seiten enthält Blöcke 100, 102, 103, 205, 210, 300, 505 und 520, welchen jeweils eine sie kennzeichnende Kopfzeile 100K, 102K, ..., 520K vorausgeht. Vor jeder dieser Kopfzeilen wird eine den jeweils übernächsten Block kennzeichnende Vorkopfzeile 102VK, 103VK, ..., 100VK übertragen. Die in Fig. 1a der Kopfzeile 520K und dem Block 520 vorausgehende Vorkopfzeile 100VK trägt der Tatsache Rechnung, daß sich nach der Übertragung des Blocks 520 der Übertragungszyklus wiederholt, wie dies durch den Pfeil P1 angedeutet ist.

Die Nutzdaten jedes der genannten Blöcke repräsentieren insgesamt eine Teletextseite. Die Nummer der betreffenden Teletext-Seite wird durch die ihr zugeordnete Kopfzeile (m,n)K identifiziert.

Mittels der Vorkopfzeile (m,n)VK erhält der empfängerseitige Decoder bereits bei Übertragungsbeginn einer Seite bzw. eines Blocks oder "zwischendurch" die Information, welche Seite als nächste Seite übertragen wird, so daß dann, wenn die Seitennummer (m,n) dieser nächsten Seite vom Benutzer angewählt wurde, bereits während der Übertragung der unmittelbar vorangehenden Seite ((m-1),n-1)) mit der Löschung des Seitenspeichers im Decoder begonnen werden kann. Beim Auftreten der Kopfzeile (m,n)K der gewünschten Seite (m,n) können dann die einlaufenden Nutzdaten dieser Seite sofort vom leeren Seitenspeicher übernommen werden.

Üblicherweise steht in der vertikalen Austastlücke jedes Fernsehhalbbildes ein nur begrenzter Übertragungsbereich, der beispielsweise fünf Fernsehzeilen umfassen kann, für die Übertragung der Teletextdaten zur Verfügung. Im Extremfalle können hierfür auch alle Zeilen des Fernsehhalbbildes zur Verfügung stehen, beispielsweise bei einem sogenannten Videotext-Kanal des Kabelfernsehens.

Wegen des eingangs erläuterten Warteintervalls von ca. 20 Millisekunden muß gemäß dem Stand der Technik zwischen jeder Vorkopfzeile und der ersten Nutzdatenzeile des ihr zugeordneten Blocks ein zeitlicher Mindestabstand von ebenfalls ungefähr 20 Millisekunden eingehalten werden.

Die Vorkopfzeilen und die Zwischenkopfzeilen unterscheiden sich - abgesehen von ihrer Lage im Teletext-Datenzyklus - nach dem soweit beschriebenen bekannten Verfahren durch nichts von den zugehörigen Kopfzeilen. Daher führte die Anwendung dieses Verfahrens auch bei einer Anzahl von Teletext-Decodern auch zu fehlerhafter Wiedergabe von Teletext-Seiten. Die betroffenen Decoder hatten bei Empfang von durch Vorkopfzeilen angekündigten Zwischenkopfzeilen oder Kopfzeilen auf das Eintreffen einer neuen Teletext-Seite geschlossen. Die Decodersteuerung wertete das Einlesen der bereits begonnenen und nun eigentlich fortzusetzenden oder der nun eigentlich erst einzulesenden Seite als bereits abgeschlossen.

Bei Teletext-Decodern mit entsprechend geeigneten Steuerungseinrichtungen, wie beispielsweise bei den unter den Typenbezeichnungen "TPU 2732" und "TPU 2735" bekannten Teletext-Prozessoren der Firma ITT Semiconductors, läßt sich der Teletext-Decoder erfindungsgemäß senderseitig so steuern, daß er Datenakquisition nicht unerwünscht vorzeitig als abgeschlossen wertet. Die bei diesen Prozessoren und allen anderen, der genannten ARD/ZDF-Spezifikation entsprechenden Decodern vorgesehene Steuerbit-Erkennungseinrichtung läßt sich zu solchen Steuerungszwecken einsetzen.

Wird nämlich beim Empfang von Teletext-Seiten anhand des senderseitig entsprechend auf den Wert "null" gesetzten Steuerbits C11 decoderseitig erkannt, daß daß die Betriebsart "Parallel-Modus" vorliegt, so wird die decoderseitige Datenakquisition erst abgeschlossen, wenn nach Empfang einer eine angeforderte Seite kennzeichnenden Kopfzeile erneut eine Kopfzeile desselben Magazins empfangen wird.

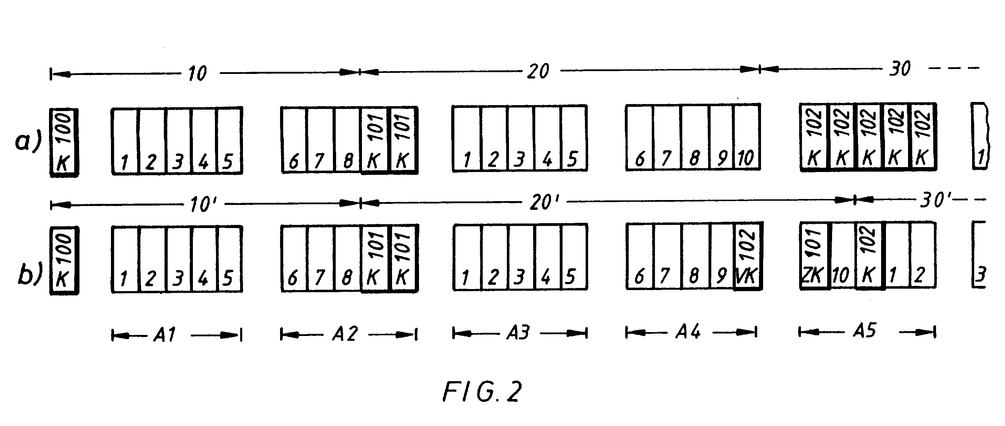

In dem in Fig. 1b schematisch dargestellte Übertragungszyklus von Teletext-Seiten gemäß einem Ausführungsbeispiel der erfindungsgemäßen ersten Ausbildung des Verfahrens folgen nunmehr relativ zueinander an anderer Stelle im Übertragungszyklus die zu der Fig. 1 beschriebenen Blöcke 100, 205, 102, 210, 103, 505, 300 und 520, welchen jeweils eine sie kennzeichnende Kopfzeile 100K, 205K, ..., 520K vorausgeht. Die nach dem in Fig. 2 dargestellten Verfahren übertragenen Vorkopfzeilen werden jedoch in der Weise in den Teletext-Datenstrom eingefügt, daß zwischen jeder Kopfzeile und dem ihm zugeordneten Block ein zum Löschen des für die zu akquirierenden Daten vorgesehenen Seitenspeichers hinreichender zeitlicher Mindestabstand, beispielsweise die erwähnten ca. 20 Millisekunden, eingehalten wird.

Die in der Darstellung in Fig. 1b dem Block 520 vorausgehende Vorkopfzeile 100K trägt der Tatsache Rechnung, daß sich nach der Übertragung des Blocks 520 der Übertragungszyklus mit der Übertragung der Kopfzeile 205K, dem Block 100 etc. wiederholt, wie dies durch den Pfeil P2 angedeutet ist.

Die nach dem Stand der Technik bislang erforderlichen Vorkopfzeilen können bei dem zu Fig. 1b beschriebenen Übertragungsverfahren ersatzlos entfallen, wodurch bei diesem Verfahren neben der Kompatibilität mit den auf dem Markt befindlichen Decodern noch der zusätzliche Vorteil erzielt wird, daß sich die Zyklusdauer im Vergleich zum Stand der Vorkopf-Technik noch weiter verkürzt.

Der in Fig. 2a dargestellte Ausschnitt aus einem Übertragungszyklus von Teletext-Zeilen gemäß dem Stand der Technik enthält Blöcke 10, 20 und (teilweise) 30, welche jeweils eine vorgestellte Kopfzeile K und nachfolgende Nutzdaten-Zeilen 1, 2, 3, 4.... mit wechselnder Länge enthalten. Die Nutzdaten jedes Blockes 10, 20, 30 repräsentieren jeweils eine Teletext-seite. Die Nummer der betreffenden Teletextseite wird durch die zugeordnete Kopfzeile K identifiziert. Im dargestellten Beispielsfalle wird angenommen, daß in der vertikalen Austastlücke jedes Fernsehhalbbildes ein Übertragungsbereich A1 bzw. A2 bzw. A3 ... mit fünf Fernsehzeilen für die Übertragung der Teletextdaten zur Verfügung steht. Im Extremfalle können hierfür auch alle Zeilen des Fernsehhalbbildes zur Verfügung stehen, beispielsweise bei einem sogenannten Videotext-Kanal des Kabelfernsehens.

Wegen des eingangs erläuterten Warteintervalls von ca. 20 Millisekunden müßten gemäß dem Teletextstandard in den Übertragungsbereichen A2 und A5 die Kopfzeilen K einmal (A2) bzw. viermal (A5) wiederholt werden, um den benötigten Zeitabstand zwischen Kopfzeile und der nächstfolgenden Nutzdatenzeile 1 einzuhalten.

Um dies zu vermeiden, vgl. Fig. 2b, wird nach dem sogenannten Vorkopfzeilen-Verfahren vor einer Kopfzeile K eine Vorkopfzeile VK übertragen, welche die Seitennummer der im Übertragungszyklus übernächsten Seite identifiziert. Im Falle des Blocks 20' identifiziert die Vorkopfzeile VK die Nummer die Seite 102, welche im darauffolgenden Block 30' übertragen wird. Mittels der Vorkopfzeile VK erhält der empfängerseitige Decoder bereits bei Übertragungsbeginn einer Seite bzw. eines Blocks oder "zwischendurch" die Information, welche Seite als nächste Seite übertragen wird, so daß dann, wenn die Seitennummer dieser nächsten Seite vom Benutzer angewählt wurde, bereits während der Übertragung der unmittelbar vorangehenden Seite mit der Löschung des Seitenspeichers im Decoder begonnen werden kann. Beim Auftreten der Kopfzeile K der gewünschten Seite können dann die einlaufenden Nutzdaten dieser Seite sofort vom leeren Seitenspeicher übernommen werden.

Im Falle des Blocks 20' liegt dessen Blockende im Übertragungsbereich A5. Die Vorkopfzeile VK mit der Nummer der darauffolgenden Seite 102 wird daher im Übertragungsbereich A4 übertragen, wobei die Lage der Vorkopfzeile VK innerhalb des Übertragungsbereichs A4 frei gewählt werden kann. Um nach erfolgter Übertragung der Vorkopfzeile VK die Seitenzugehörigkeit der darauffolgenden Nutzdatenzeile 10 des noch nicht vollständig übertragenen Blocks 20' dem Decoder zu identifizieren, wird unmittelbar im Anschluß an die Vorkopfzeile VK die Kopfzeile K des momentan übertragenen Blocks als Zwischenkopfzeile ZK wiederholt.

Die Vorkopfzeilen und die Zwischenkopfzeilen unterscheiden sich - abgesehen von ihrer Lage im Datenzyklus - nach dem soweit beschriebenen bekannten Verfahren durch nichts von den zugehörigen Kopfzeilen. Daher führte die Anwendung dieses bekannten Verfahrens bei einer Anzahl von Teletext-Decodern auch zu fehlerhafter Wiedergabe von Teletext-Seiten. Die betroffenen Decoder hatten bei Empfang von durch Vorkopfzeilen angekündigten Zwischenkopfzeilen oder Kopfzeilen auf das Eintreffen einer neuen Teletext-Seite geschlossen. Die Decodersteuerung wertete das Einlesen der bereits begonnenen und nun eigentlich fortzusetzenden oder der nun eigentlich erst einzulesenden Seite als bereits abgeschlossen.

## Patentansprüche

1. Verfahren zum Übertragen von Daten in Fernsehzeilen, welche wiedergabeseitig gesammelt und als Teletext-Seite dargestellt werden, wobei mindestens zwei Teletext-Seiten vorgesehen sind und die jeweils eine Teletext-Seite repräsentierenden Nutzdaten als ein oder mehrere Datenpakete und diese wiederum zu einem Bock zusammengefaßt werden, welchem eine Kopfzeile in Form eines die Magazin- und die Seitennummer dieses Blocks identifizierenden Datenpaketes vorangestellt wird, **dadurch gekennzeichnet,** daß nicht alle Teletext-Seiten einem einzigen Magazin zugeordnet werden, daß zwischen einem Block (505) und der diesem zugeordnete Kopfzeile (505K) ein anderer Block (103) und/oder eine andere Kopfzeile (300K) eingefügt werden, wobei der andere Block (103) eine Magazinnummer (1) aufweist, die von der Magazinnummer (5) des erstgenannten Blocks (505) verschieden ist, und wobei die andere Kopfzeile (300K) eine Magazinnumer (3) aufweist, die von der Magazinnummer (5) der erstgenannten Kopfzeile (505K) verschieden ist.

2. Verfahren nach Anspruch 1, **dadurch gekennzeichnet,** daß bei der Ausstrahlung der Teletext-Seiten zugleich ein im Teletext-Standard zur Unterscheidung der Magazin-Übertragungsarten vorgesehenes Steuerbit mit dem den Parallel-Modus kennzeichnenden Wert übertragen wird.

3. Verfahren nach Anspruch 1 oder 2, **dadurch gekennzeichnet,** daß die Datenpakete der Blöcke einerseits und die diesen jeweils zugeordneten Kopfzeilen andererseits in Zeilen unterschiedlicher Fernseh-Halbbilder übertragen werden.

4. Verfahren nach einem der vorhergehenden Ansprüche, **dadurch gekennzeichnet,** daß zwischen dem Datenpaket einer Kopfzeile und den Datenpaketen des ihr zugeordneten Blocks ein zeitlicher Mindestabstand von etwa 20 Millisekunden eingehalten wird.

## Claims

1. Method of transmitting data in television lines in which the data is gathered together at the reproduction end and displayed as teletext pages, wherein at least two teletext pages are provided and the items of user data representing a respective teletext page are combined to form one or more data packets and these in turn are combined into a block, and wherein a header in the form of a data packet identifying the magazine number and the page number of this block is placed in front of said block, characterised in that the teletext pages are not all associated with a single magazine, that a further block (103) and/or a further header (300K) are inserted between a block (505) and the header (505K) associated therewith, wherein the further block (103) has a magazine number (1) which is different from the magazine number (5) of the first said block (505) and wherein the further header (300K) has a magazine number (3) which is different from the magazine number (5) of the first said header (505K).

2. Method in accordance with Claim 1, characterised in that a control bit, which is used in the standard teletext transmission process for distinguishing between the magazine transmission types, is transmitted simultaneously during the transmission of the teletext pages with the value identifying the parallel mode.

3. Method in accordance with Claim 1 or 2, characterised in that the data packets of each block on the one hand and the respective heaters associated therewith on the other hand are transmitted in the lines of different television fields.

4. Method in accordance with any of the preceding Claims, characterised in that a minimum time span of approximately 20 milliseconds is observed between the data packet of one header and the data packets of the block associated therewith.

## Revendications

1. Procédé de transmission de données sous forme de lignes TV qui sont regroupées côté réception et présentées sous forme de pages de télétexte, pour lequel au moins deux pages de télétexte sont prévues et les données utiles représentant à chaque fois une page de télétexte sont réparties en un ou plusieurs paquets de données qui, à leur tour, sont regroupés en un seul bloc précédé d'une ligne d'en-tête sous la forme d'un paquet de données identifiant le numéro de magasin et de page de ce bloc, **caractérisé en ce que** toutes les pages de télétexte ne sont pas associées à un seul magasin, qu'un bloc (103) et/ou une ligne d'en-tête (300K) sont insérées entre un premier bloc (505) et une première ligne d'en-tête (505K) associée à celui-ci, où le bloc (103) présente un numéro de magasin (1) qui est différent du numéro de magasin (5) du premier bloc (505) et où la ligne d'en-tête (300K) présente un numéro de magasin (3) qui est différent du numéro de magasin (5) de la première ligne d'en-tête (505K).

2. Procédé selon la revendication 1, **caractérisé en ce que** l'on transmet, simultanément à l'émission des pages de télétexte, un bit de commande, prévu dans la norme de télétexte pour indiquer le type de transmission, en lui attribuant une valeur identifiant le mode « parallèle ».

3. Procédé selon la revendication 1 ou 2, **caractérisé en ce que** les paquets de données des blocs, d'un côté, et les lignes d'en-tête qui leur sont à chaque fois associées, d'un autre côté, sont transmis dans des lignes appartenant à des trames TV différentes.

4. Procédé selon l'une des revendications précédentes, **caractérisé en ce que** l'on respecte une intervalle temporel minimal d'environ 20 millisecondes entre le paquet de données d'un ligne d'en-tête et les paquets de données du bloc auquel elle est associée.
